# EUROPEAN PATENT APPLICATION

(11) **EP 2 765 501 A1**
(43) Date of publication of application: **13.08.2014**
(21) Application number: 14153954.4
(22) Date of filing: 05.02.2014
(51) Int. Cl.: G06F 3/06

(54) **Chained, scalable storage devices**

(30) Priority: 12.02.2013 US 201313765253
(71) Applicant: LSI Corporation, San Jose, CA 95131 (US)
(72) Inventor: Cohen, Earl T., Milpitas, CA 95035 (US)
(74) Representative: Williams, David John

(57) **Abstract**

Described embodiments access data in a chained, scalable storage system. A primary agent of one or more storage devices receives a host request including a logical address from a host coupled to the primary agent. The primary agent determines, based on the logical address, a corresponding physical address in at least one of the storage devices and generates, based on the physical address, a sub-request for each determined physical address in the storage devices. The primary agent sends, via a storage device interface network operable independently of the host, the sub-requests to the storage devices. The storage device interface network is a peer-to-peer network coupling the storage devices to the primary agent. The primary agent receives sub-statuses in response to the sub-requests, and determines an overall status. The primary agent provides the overall status to the host such that the host is coupled to the storage devices without a switch.

## Description

### Cross-Reference to Related Applications

This application is a continuation-in-part, and claims the benefit of the filing date, of U.S. Patent application no. 13/702,976, filed December 7, 2012, which claims the benefit of the filing date of U.S. provisional application no. 61/497,525 filed June 16, 2011, International Patent Application no. PCT/US2011/040996 filed June 17, 2011, and U.S. provisional application no. 61/356,443 filed June 18, 2010, the teachings of all which are incorporated herein in their entireties by reference.

### BACKGROUND

A Storage Area Network (SAN) is a system that provides access to consolidated, block-level storage, such as disk arrays and tape libraries, to one or more host devices coupled to the SAN. A SAN represents a plurality of storage devices as a single logical interface to the host devices, conceptually aggregating the storage implemented by each of the storage devices into a single logical storage space. A typical SAN might be scalable, meaning that the amount of storage space (e.g., the number of storage devices) can be changed as needed in different SAN systems. As noted, a SAN provides block-level access, meaning that the file system is typically managed by the host devices. A typical SAN might employ block-level protocols such as Fibre Channel (FC), Advanced Technology Attachment (ATA) over Ethernet (AoE), Internet Small Computer System Interface (iSCSI) or HyperSCSI. A SAN directly transfers data between storage devices and host devices.

A Network Attached Storage (NAS) is a system that provides file-level access to one or more host devices coupled to the NAS. Unlike a SAN, the NAS system provides a file system for its attached storage devices, essentially acting as a file server accessing one or more local block-level storage devices. A typical NAS might employ file-level protocols such as Network File System (NFS) or Server Message Block / Common Internet File System (SMB/CIFS). A SAN-NAS hybrid system is a system that provides hosts with both file-level access like a NAS device and block-level access like a SAN system from the same storage system.

In SAN, NAS and SAN-NAS hybrid systems, it is desired to employ multiple storage devices such that the size of total system storage can be increased by grouping together a plurality of storage devices. Such grouping of storage devices typically requires communication hierarchy with a switch such that the storage devices are available to the host, either individually or in aggregate.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described embodiments access data in a chained, scalable storage system. A primary agent of one or more storage devices receives a host request including a logical address from a host coupled to the primary agent. The primary agent determines, based on the logical address, a corresponding physical address in at least one of the storage devices and generates, based on the physical address, a sub-request for each determined physical address in the storage devices. The primary agent sends, via a storage device interface network operable independently of the host, the sub-requests to the storage devices. The storage device interface network is a peer-to-peer network coupling the storage devices to the primary agent. The primary agent receives sub-statuses in response to the sub-requests, and determines an overall status. The primary agent provides the overall status to the host such that the host is coupled to the storage devices without a switch.

### BRIEF DESCRIPTION OF THE DRAWING FIGURES

Other aspects, features, and advantages of described embodiments will become more fully apparent from the following detailed description, the appended claims, and the accompanying drawings in which like reference numerals identify similar or identical elements.
FIG. 1 shows a block diagram of a scalable storage system in accordance with exemplary embodiments;
FIG. 2 shows a block diagram of a scalable storage system in accordance with exemplary embodiments;
FIG. 3 shows a block diagram of a scalable storage system in accordance with exemplary embodiments;
FIG. 4 shows a block diagram of a scalable storage system in accordance with exemplary embodiments; and
FIG. 5 shows a block diagram of a scalable storage system in accordance with exemplary embodiments.

### DETAILED DESCRIPTION

Described embodiments access data in a chained, scalable storage system. A primary agent of one or more storage devices receives a host request including a logical address from a host coupled to the primary agent. The primary agent determines, based on the logical address, a corresponding physical address in at least one of the storage devices and generates, based on the physical address, a sub-request for each determined physical address in the storage devices. The primary agent sends, via a storage device interface network operable independently of the host, the sub-requests to the storage devices. The storage device interface network is a peer-to-peer network coupling the storage devices to the primary agent. The primary agent receives sub-statuses in response to the sub-requests, and determines an overall status. The primary agent provides the overall status to the host such that the host is coupled to the storage devices without a switch.

**Table 1 defines a list of acronyms employed throughout this specification as an aid to understanding the described embodiments:**

| **TABLE 1** | | | | |
|---|---|---|---|---|
| AoE | Advanced Technology Attachment (ATA) over Ethernet | | CD | Compact Disc |
| CIFS | Common Internet File System | | DVD | Digital Versatile Disc |
| FC | Fibre Channel | | HDD | Hard Disk Drive |
| HIF | Host InterFace | | IC | Integrated Circuit |
| I/O | Input/Output | | iSCSI | Internet SCSI |
| MRAM | Magnetoresistive Random Access Memory | | NAS | Network Attached Storage |
| NFS | Network File System | | PCI-E | Peripheral Component Interconnect Express |
| PHY | PHysical Layer | | RAID | Redundant Array of Independent Disks |
| RF | Radio Frequency | | SAN | Storage Area Network |
| SAS | Serial Attached SCSI | | SATA | Serial Advanced Technology Attachment |
| SCSI | Small Computer System Interface | | SMB | Server Message Block |
| SoC | System on Chip | | SRIO | Serial Rapid Input/Output |
| SSD | Solid-State Disk | | USB | Universal Serial Bus |

In some SAN, NAS or SAN-NAS hybrid systems, the storage devices might have a primary agent of the devices accept storage requests received from host devices over a host-interface (HIF) protocol. The primary agent processes the host requests and generates one or more sub-requests to secondary agents of each storage device over a peer-to-peer protocol. The secondary agents accept and process the sub-requests, and report sub-status information for each of the sub-requests to the primary agent and/or the host. The primary agent optionally accumulates the sub-statuses into an overall status of the host request. Peer-to-peer communication between the agents is optionally used to communicate redundancy information during host accesses and/or failure recoveries. Various failure recovery techniques might reallocate storage, reassign agents and recover data via redundancy information.

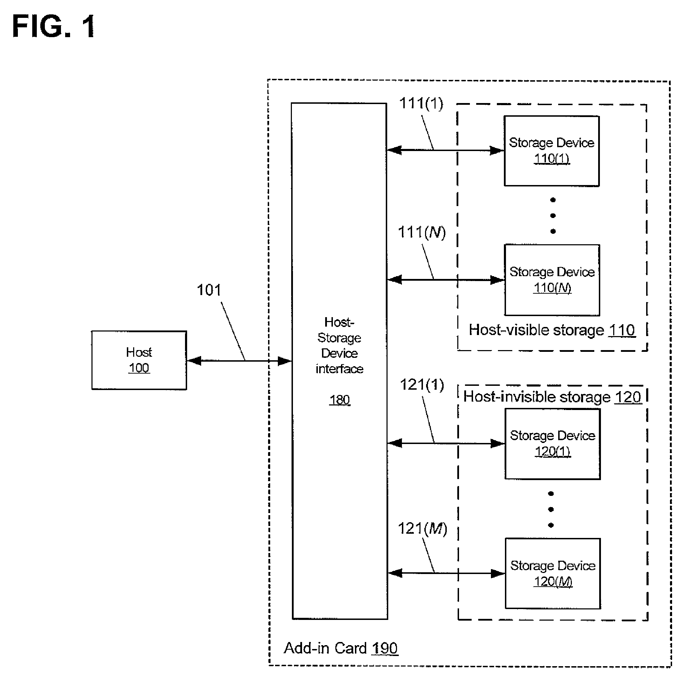

FIG. 1 shows a block diagram of an exemplary scalable storage system, for example as described in related U.S. Patent application no. 13/702,976, filed December 7, 2012, which is incorporated herein by reference. As shown in FIG. 1, a scalable storage system includes at least one host device (**100**) coupled to pluggable storage module **190** via coupling **101.** Coupling **101** might be implemented as a transmission medium, such as a backplane, copper cables, optical fibers, one or more coaxial cables, one or more twisted pair copper wires, and/or one or more radio frequency (RF) channels. For example, coupling **101** might be implemented as an FC, AoE, iSCSI, or HyperSCSI link (e.g., in a SAN system) or as an NFS or SMB/CIFS link (e.g., in a NAS system).

Pluggable storage module **190** includes at least one host/storage device interface (shown as **180**). Although shown in FIG. 1 as being integrated with pluggable storage module **190,** in some embodiments, host/storage device interface **180** might be integrated with each host device 100. In some embodiments, pluggable storage module **190** might be implemented as an add-in card. As shown in FIG. 1, pluggable storage module **190** includes host-visible storage **110,** which includes one or more storage devices **110(1)-110(*N*).** Host-visible storage **110** implements storage, part or all of which is configured to allow access by host devices **100** via host to storage device interface **180.** Pluggable storage module **190** also includes host-invisible storage **120,** which includes one or more storage devices **120(1)-120(*M*).** Host- invisible storage **120** implements storage that is not directly reported and, thus, "invisible," to host devices **100.** However, the storage that is invisible to the host is reported and is indirectly accessible to host devices **100** by elements of host-visible storage **110,** for example via a peer-to-peer protocol. For example, a primary agent of the storage elements reports the combined storage capacity of the primary agent and any secondary agents in communication with the primary agent, even though the secondary agents are not visible to host device **100.** In some embodiments, storage devices **110** and **120** are physical storage devices, such as Solid State Disks (SSDs), Hard Disk Drives (HDDs), tape libraries, hybrid magnetic and solid state storage systems, or some combination thereof.

Together, combinations of couplings **101, 111** and **121** enable request, status, and data transfers between host devices **100** and host-visible storage **110** (and host-invisible storage **120** via host-visible storage **110**). For example, one or more of the couplings enable transfers via a host-interface protocol, for example by one of host devices **100** operating as a master and one of the storage elements of host-visible storage **110** operating as a slave. Further, one or more of the couplings enable transfers via a peer-to-peer protocol, for example by one of the elements of host-visible storage **110** operating as a primary agent and one of the elements of host-invisible storage **120** or another one of the elements of host-visible storage **110** operating as a secondary agent. Couplings **111** and **121** might be implemented as custom-designed communication links, or might be implemented as links conforming to a standard communication protocol such as, for example, a Small Computer System Interface (SCSI) link, a Serial Attached SCSI (SAS) link, a Serial Advanced Technology Attachment (SATA) link, a Universal Serial Bus (USB), a Fibre Channel (FC) link, an Ethernet link (e.g., a 10GE link), an IEEE 802.11 link, an IEEE 802.15 link, an IEEE 802.16 link, a Peripheral Component Interconnect Express (PCI-E) link, a Serial Rapid I/O (SRIO) link, an InfiniBand link, or other similar interface link.

In some embodiments, host/storage device interface **180** might typically be implemented as one or more PCI-E or InBniBand switches such that host device **100,** coupling **101** and host/storage device interface **180** implement a unified switch. In further embodiments, the unified switch is operable as a transparent switch with respect to host-visible storage **110** and also simultaneously operable as a non-transparent switch with respect to host-invisible storage **120.** As shown in FIG. 1, the PCI-E switch (e.g., host/storage device interface **180**) is a separate element distinct from each of storage devices **110** and **120.**

Thus, related U.S. Patent application no. 13/702,976, filed December 7, 2012, incorporated herein by reference, describes a scalable storage system including one or more PCI-E or InfiniBand switches (e.g., host/storage device interface **180**). If the PCI-E switch is a non-transparent switch, details of the topology below the switch and specifics of the configuration of individual storage devices is hidden from the host device (e.g., on host initialization discovery of attached devices). Thus, employing the non-transparent switch, described embodiments could select one of the storage devices to act as a master device (e.g., a primary agent) to handle all host communication with all the storage devices, and select the rest of the storage devices to act as slave devices (e.g., as a secondary agent) that are hidden from the host device, even though all of storage devices **110** and **120** might be duplicate devices. Further, the aggregate group of storage devices might appear as a single storage device to the host device.

Other described embodiments can provide scalable functionality without employing a separate PCI-E switch by employing "neighbor-to-neighbor" communication such that communications employ point-to-point links between each of the storage devices without a need for a higher level (e.g., a PCI-E hierarchy). By techniques such as routing or switching, all of the storage devices are able to communicate among each other even though all the connections are point-to-point between the storage devices.

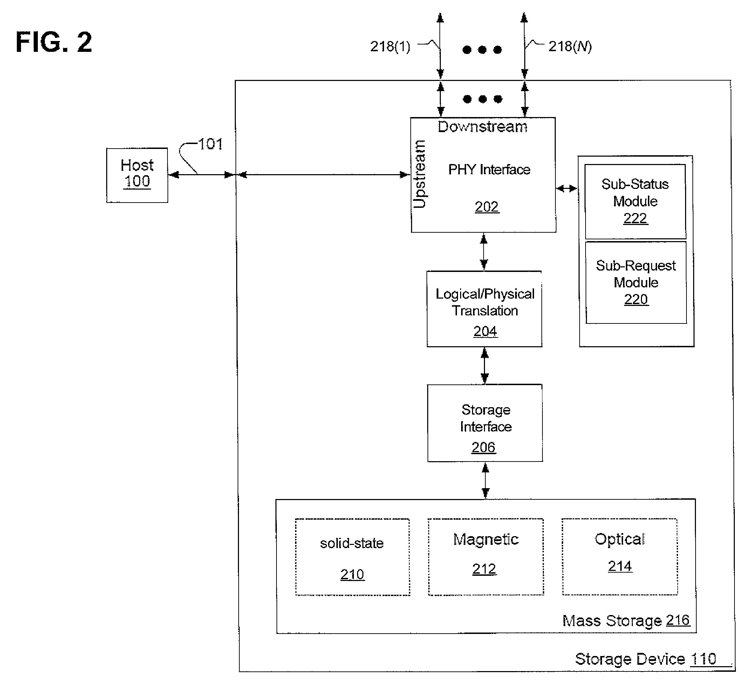

FIG. 2 shows a block diagram of an exemplary storage device **110.** Host device **100** is coupled to storage device **110** via coupling **101.** Coupling **100** is in communication with PHY interface **202.** As shown in FIG. 2, PHY interface **202** includes one or more upstream physical layer links or ports (PHYs) (shown as **101**) and one or more downstream PHYs (shown as **218**(**1**)-**218(*N*)).** As shown in FIG. 2, storage device **110** includes a mass storage device **216** that includes one or more of solid-state storage **210** (e.g., an SSD), magnetic storage **212** (e.g., an HDD or tape library) and optical storage **214** (e.g., a CD or DVD). Storage device **110** includes storage interface **206,** which communicates to each individual storage device **210, 212** and **214.** Logical/Physical translation module **204** translates between logical addresses for operations received from host device **100** and physical addresses on mass storage **216.** Storage device **110** also includes sub-status module **222** and sub-request module **220,** both of which are in communication with PHY interface **202.**

In described embodiments, the upstream PHYs (e.g., **101**) are in communication with a host device (e.g., **100**) via the PCI-E hierarchy, and downstream PHYs (e.g., **218**) are in communication with other storage devices (e.g., multiple of **110**). Exemplary embodiments might employ a fixed number of configurable PHYs, for example, 8 total configurable PHYs, where a given PHY might be configured as an upstream link or a downstream link. Having configurable PHYs allows for a trade-off between bandwidth delivered to host **101** (e.g., upstream connectivity) and capacity of the scalable storage system (e.g., downstream connectivity). Other embodiments might employ a fixed number of upstream PHYs and a fixed number of downstream PHYs, for example, 2 upstream PHYs and 6 downstream PHYs.

In various embodiments, some or all of PHYs **101** and **218** of a storage device (e.g., 110) might be operable at the same speed (e.g., a same maximum speed) or might each be operable at different speeds. For example, some embodiments might allow each of PHYs **101** and **218** to independently support any one or more of: PCI-E Gen1, Gen2, Gen3 or Gen4, 10GE, InfiniBand, SAS, SATA, or a nonstandard protocol for communication with one or more storage devices. Each of PHYs **101** and **218** are coupled to one or more respective PHY interfaces integrated within each storage device **110.** When, for example, PHY interface **202** is a PCI-E interface, the PCI-E interface is configurable to communicate as one or more of: a root complex; a forwarding point; and an endpoint. A forwarding point is similar to a root complex in that a forwarding point can send and receive traffic among one or more PCI-E interfaces. A root complex is additionally a root of a separate PCI-E hierarchy. Since a host device (e.g., **100**) coupled to one or more storage devices (e.g., **110**) is itself a root complex, if one or more of the storage devices coupled to the host also is a root complex, then a multi-root PCI-E hierarchy is created.

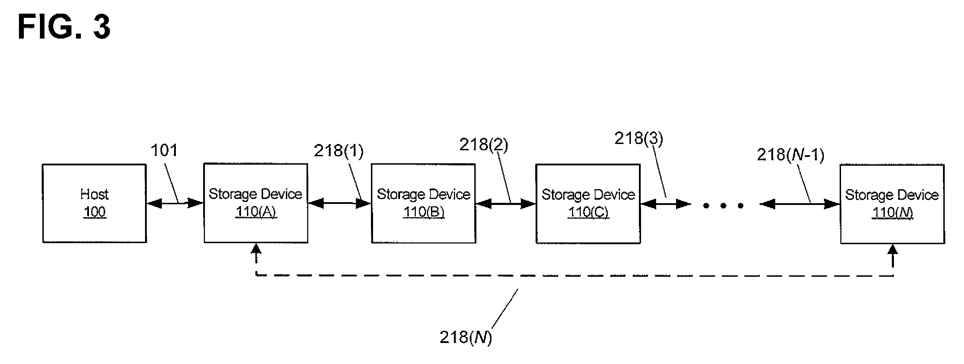

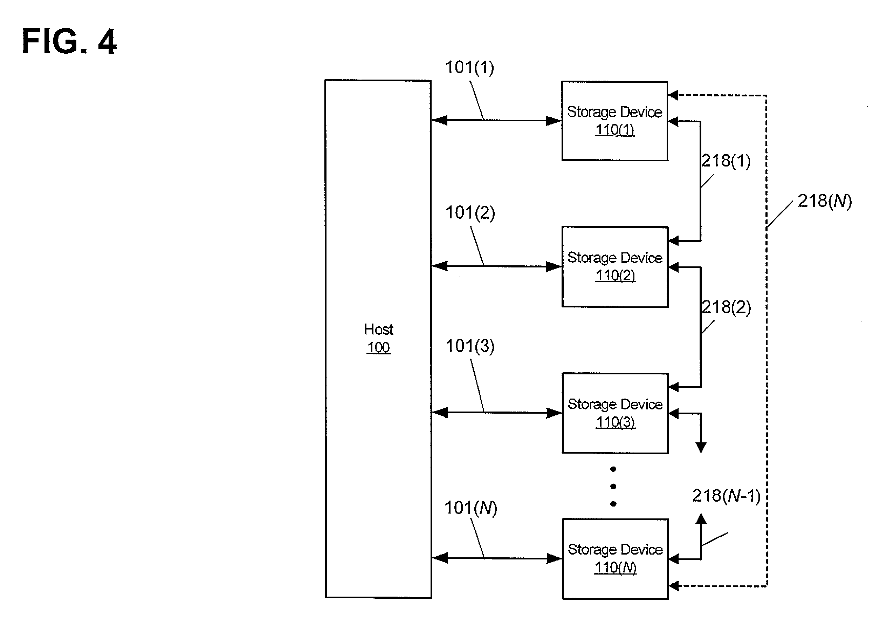

Multiple of storage device **110** might be connected in any number of different ways. FIGs. 3-5 show block diagrams of exemplary point-to-point connections of multiple storage devices in scalable storage systems in accordance with exemplary embodiments. As shown, in various embodiments the PHYs and the PHY controllers might be coupled via: a daisy chain (or optionally a loop) as shown in FIG. 3; a fixed, 1-to-1 interconnection to a host device (shown in FIG. 4); a full crossbar topology; a partial crossbar topology; a multiplexor network; a combination thereof; or any other technique for coupling multiple hardware devices. In some embodiments, the connection network among the storage devices is a switched network, while in others, the connection network among the storage devices is a routed network. Further, in some embodiments, at least some of storage devices **110** have a different configuration of PHY, or one or more different types of PHYs (e.g., PCI-E, 10GE, InfiniBand, SAS, SATA, etc.).

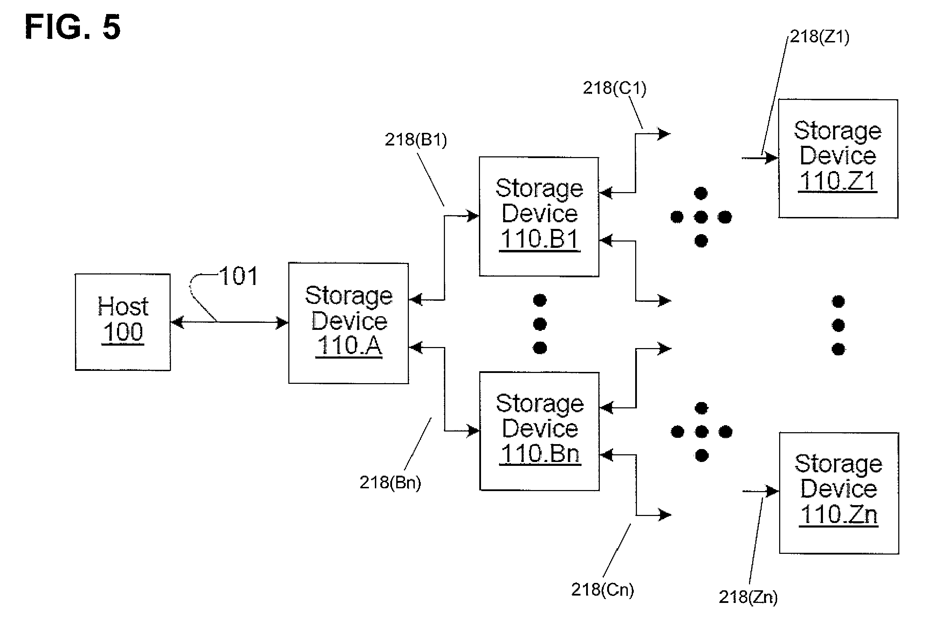

As shown in FIGs. 3 and 4, storage devices **110(A)-110(*N*)** of FIG. 3, and storage devices **110(1)-110(*N*)** of FIG. 4 have internal PHY interfaces configured as forwarding points. FIG. 5 shows a hierarchical coupling where all of storage devices **110** have PHY interfaces that are configured as forwarding points, except storage devices **110.Z1** through **110.ZN,** which have PHY interfaces configured as endpoints. Thus, in described embodiments, one or more of storage devices **110** (e.g., storage device **110(A)** of FIG. 3, **110(1)-110(N)** of FIG. 4, **110.A** of FIG. 5) is coupled to host device **100,** and all of the storage devices are coupled directly to host device **100** (e.g., as shown in FIG. 4), or are coupled indirectly to host device **100** via others of the storage devices, without employing, for example, a PCI-E switch.

At least one of storage devices **110** acts as a primary agent, and at least one or more of storage devices **110** act as secondary agents. In various embodiments, the one or more primary agents have a direct, more direct, shorter, and/or lower latency connection with host device **100** than the secondary agents. For example, as shown in FIG. 3, storage device **110(A)** might act as the primary agent for storage devices **110(B)-110(*N*),** since, for example, storage device **110(A)** has a direct connection to host device **100,** while storage devices **110(B)-110(*N*)** are coupled to one another in a daisy chain. As shown in FIG. 4, all of storage devices **110(1)-110(*N*)** are able to act as primary agents for themselves, as each storage device **110(1)-110(*N*)** has a direct connection to host device **100.** Each storage device having a direct connection to the host advantageously enables bandwidth to/from the host to scale linearly with a number of the storage devices. Further, having a subset of the storage devices, such as just one of the storage devices, act as a primary agent and the others as secondary agents enables scalable capacity without a need for the host to control a plurality of separate storage devices. As shown in FIG. 5, storage device **110.A** might act as the primary agent for storage devices **110.B1-110.Bn,** since, for example, storage device **110.A** has a direct connection to host device **100,** while storage device **110.B1** might act as a primary agent for storage devices (not shown) coupled via couplings **218(C1),** and so on.

In described embodiments, all communication between primary agents and secondary agents is performed as neighbor-to-neighbor traffic that is not visible to host device **100** (and, thus, not visible to the PCI-E hierarchy of host device **100**). For example, as shown in FIG. 3, all of the neighbor-to-neighbor traffic is performed on couplings **218(1)-218(*N*),** and none of the neighbor-to-neighbor traffic is performed on connection **101** which couples storage devices **110** to host device **100.** Similarly, as shown in FIG. 4, all of the neighbor-to-neighbor traffic is performed on couplings **218(1)-218(*N*),** and none of the neighbor-to-neighbor traffic is performed on couplings **101(1)-101(*N*)** coupling storage devices **110(1)-110(*N*)** to host device **100.** Similarly, as shown in FIG. 5, all of the neighbor-to-neighbor traffic is performed on couplings **218(B1)-218(Zn),** and none of the neighbor-to-neighbor traffic is performed on coupling **101** coupling storage device **110.A** to host device **100.**

In described embodiments, the neighbor-to-neighbor traffic is control traffic, such as the forwarding of commands received by a primary agent from host device **100** to a specific one of storage devices **110** and responses (e.g., completions), back to a primary agent from the specific one of storage devices **110,** information derived from commands received from host device **100,** maintenance traffic such as synchronization or heartbeats; RAID or other data redundancy control or data traffic (e.g., deltas for RAID), and other traffic. For example, when a write command updates a part of a RAID stripe on a particular one of storage devices **110,** the particular storage device sends a RAID delta to one or more of the other storage devices (e.g., the one of storage devices storing the RAID parity of the stripe) as neighbor-to-neighbor traffic.

Couplings **101** and **218,** as shown in FIGs. 3-5, are optionally or selectively of different bandwidths and/or different protocols. For example, upstream connections (e.g., coupling **101**) to host device **100** might typically be PCI-E Gen4, while downstream connections (e.g., couplings **218**) among the various storage devices **110** might typically be PCI-E Gen3 or a different protocol, such as 10GE, InfiniBand, SAS, etc. Any of the couplings might have a different bandwidth or a different number of physical links from each other. In some embodiments, control traffic of any of couplings **101** and **218** might be transferred over relatively lower-bandwidth sideband couplings, while data traffic might be transferred over relatively higher-bandwidth main band couplings. Thus, in some embodiments, any of couplings **101** and **218** might be implemented as custom-designed communication links, or might be implemented as links conforming to a standard communication protocol such as, for example, SCSI, SAS, SATA, USB, FC, Ethernet (e.g., 10GE), IEEE 802.11, IEEE 802.15, IEEE 802.16, PCI-E, SRIO, InfiniBand, or other similar interface link.

In some embodiments, such as shown in FIG. 4, a bandwidth upstream to host device **100** is substantially equal to an aggregate deliverable bandwidth of the various storage devices **110.** In some embodiments, such as shown in FIG. 5, storage devices **110** that are communicatively closer to host device **100** (e.g., storage device **110.A**) are configured for a higher bandwidth than storage devices communicatively farther from host device **100** (e.g., storage device **110.Z1**). In some embodiments, each of storage devices **110** might have different capacities, capabilities, or be implemented as different types of storage media, such as Solid State Disks (SSDs), Hard Disk Drives (HDDs), Magnetoresistive Random Access Memory (MRAM), tape libraries, hybrid magnetic and solid state storage systems, or some combination thereof.

In some embodiments, a connection network among storage devices **110** uses a PCI-E protocol (or other standard protocol) but in nonstandard ways, such as by having a circular (loop) interconnection (e.g., as indicated by optional coupling **218(*N*)** in FIGs. 3 and 4). In further embodiments, the connection network among storage devices **110** is enabled to use nonstandard bandwidths, signaling, commands or protocol extensions to advantageously improve performance. In general, the connection network among the storage devices **110** is enabled to provide inter-device communication in a manner efficient in one or more of bandwidth, latency, and power.

Thus, as described herein, described embodiments access data in a chained, scalable storage system. A primary agent of one or more storage devices receives a host request including a logical address from a host coupled to the primary agent. The primary agent determines, based on the logical address, a corresponding physical address in at least one of the storage devices and generates, based on the physical address, a sub-request for each determined physical address in the storage devices. The primary agent sends, via a storage device interface network operable independently of the host, the sub-requests to the storage devices. The storage device interface network is a peer-to-peer network coupling the storage devices to the primary agent. The primary agent receives sub-statuses in response to the sub-requests, and determines an overall status. The primary agent provides the overall status to the host such that the host is coupled to the storage devices without a switch.

Reference herein to "one embodiment" or "an embodiment" means that a particular feature, structure, or characteristic described in connection with the embodiment can be included in at least one embodiment. The appearances of the phrase "in one embodiment" in various places in the specification are not necessarily all referring to the same embodiment, nor are separate or alternative embodiments necessarily mutually exclusive of other embodiments. The same applies to the term "implementation."

As used in this application, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

While the exemplary embodiments have been described with respect to processing blocks in a software program, including possible implementation as a digital signal processor, micro-controller, or general-purpose computer, described embodiments are not so limited. As would be apparent to one skilled in the art, various functions of software might also be implemented as processes of circuits. Such circuits might be employed in, for example, a single integrated circuit, a multi-chip module, a single card, or a multi-card circuit pack.

Described embodiments might also be embodied in the form of methods and apparatuses for practicing those methods. Described embodiments might also be embodied in the form of program code embodied in non-transitory tangible media, such as magnetic recording media, optical recording media, solid state memory, floppy diskettes, CD-ROMs, hard drives, or any other non-transitory machine-readable storage medium, wherein, when the program code is loaded into and executed by a machine, such as a computer, the machine becomes an apparatus for practicing described embodiments. Described embodiments might can also be embodied in the form of program code, for example, whether stored in a non-transitory machine-readable storage medium, loaded into and/or executed by a machine, or transmitted over some transmission medium or carrier, such as over electrical wiring or cabling, through fiber optics, or via electromagnetic radiation, wherein, when the program code is loaded into and executed by a machine, such as a computer, the machine becomes an apparatus for practicing the described embodiments. When implemented on a general-purpose processor, the program code segments combine with the processor to provide a unique device that operates analogously to specific logic circuits. Described embodiments might also be embodied in the form of a bitstream or other sequence of signal values electrically or optically transmitted through a medium, stored magnetic-field variations in a magnetic recording medium, etc., generated using a method and/or an apparatus of the described embodiments.

It should be understood that the steps of the exemplary methods set forth herein are not necessarily required to be performed in the order described, and the order of the steps of such methods should be understood to be merely exemplary. Likewise, additional steps might be included in such methods, and certain steps might be omitted or combined, in methods consistent with various described embodiments.

As used herein in reference to an element and a standard, the term "compatible" means that the element communicates with other elements in a manner wholly or partially specified by the standard, and would be recognized by other elements as sufficiently capable of communicating with the other elements in the manner specified by the standard. The compatible element does not need to operate internally in a manner specified by the standard. Unless explicitly stated otherwise, each numerical value and range should be interpreted as being approximate as if the word "about" or "approximately" preceded the value of the value or range.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. Signals and corresponding nodes or ports might be referred to by the same name and are interchangeable for purposes here.

It will be further understood that various changes in the details, materials, and arrangements of the parts that have been described and illustrated in order to explain the nature of the described embodiments might be made by those skilled in the art without departing from the scope expressed in the following claims.

## Claims

1. A method of accessing data in a chained, scalable storage system, the method comprising:
receiving, by a primary agent of one or more storage devices, a host request from a host device coupled to the primary agent via a host interface network, the request to access a logical address of the one or more storage devices;
determining, by the primary agent based on the logical address, a corresponding physical address in at least one of the one or more storage devices;
generating, by the primary agent based on the physical address, a sub-request corresponding to the host request and each of the determined corresponding physical addresses in at least one of the one or more storage devices;
sending, by the primary agent via a storage device interface network operable independently of the host device, the sub-requests to the at least one storage device, the storage device interface network a peer-to-peer network coupling the storage devices to the primary agent; and
receiving, by the primary agent from the at least one storage device, respective sub-statuses in response to the sub-requests, determining an overall status based on each respective sub-status, and providing the overall status to the host device,
wherein the host device is coupled to the one or more storage devices without employing a network switch.

2. The method of claim 1, wherein the storage device interface network is not directly accessible to the host interface network.

3. The method of claim 2 further comprising:
sending, by each of the storage devices, data communication via a respective separate data communication path with the host separate from the storage device interface network,
whereby control traffic between the host device and the storage devices is solely between the host device and the primary agent, while data communication bandwidth scales with a number of the storage devices.

4. The method of claim 1 wherein, the host interface network and the storage device interface network comprise transmission media comprising at least one of: a backplane, one or more copper cables, one or more optical fibers, one or more coaxial cables, one or more twisted pair copper wires.

5. The method of claim 4 further comprising:
selectively providing higher bandwidth storage device interface network connections to a subset of the one or more storage devices, the subset of the one or more storage devices comprises one or more of the storage devices located proximately to the host device.

6. The method of claim 5, wherein the host interface network comprises a Peripheral Component Interconnect Express (PCI-E) Gen4 network, and the storage device interconnect network comprises one or more of: a PCI-E Gen3 network, an Ethernet network, a Serial Attached Small Computer System Interface (SAS) network, and a Serial Advanced Technology Attachment (SATA) network.

7. The method of claim 1, wherein, for the method, the one or more storage devices comprise at least one of: a Solid State Disk (SSD), a Hard Disk Drive (HDD), a Magnetoresistive Random Access Memory (MRAM), a tape library, and a hybrid magnetic and solid state storage system.

8. The method of claim 1, further comprising:
providing a bandwidth to the host interface network that is related to an aggregate deliverable bandwidth of the one or more storage devices,
wherein:
the storage device interface network comprises one or more physical links, each link having an independent bandwidth, and
each of the one or more physical links comprise (i) a relatively lower-bandwidth sideband coupling for transferring control data, and (ii) a relatively higher-bandwidth main band coupling for transferring user data.

9. The method of claim 8, wherein the providing comprises providing each of the storage devices with a separate physical link of the host interface network.

10. The method of claim 1, further comprising:
employing the one or more storage devices in a Redundant Array of Independent Disks (RAID) system.

11. A chained, scalable storage system comprising:
a plurality of storage devices, at least one of the storage devices a primary agent for one or more of the plurality of storage devices;
a host device coupled via a host interface network to the at least one primary agent,
wherein the at least one primary agent is configured to:
receive a host request from the host device, the request to access a logical address of the one or more of the plurality of storage devices;
determine, based on the logical address, a corresponding physical address in at least one of the one or more of the plurality of storage devices;
generate, based on the physical address, a sub-request corresponding to the host request and each of the determined corresponding physical addresses in at least one of the one or more of the plurality of storage devices;
send, via a storage device interface network operable independently of the host device, the sub-requests to the at least one storage device, the storage device interface network a peer-to-peer network coupling the storage devices to the primary agent; and
receive, from the at least one storage device, respective sub-statuses in response to the sub-requests, determine an overall status based on each respective sub-status, and provide the overall status to the host device,
wherein the host device is coupled to the one or more storage devices without employing a network switch.

12. The system of claim 11, wherein the storage device interface network is not directly accessible to the host interface network.

13. The system of claim 12, wherein control traffic between the host device and the storage devices is solely between the host device and the at least one primary agent, and data bandwidth scales with a number of the storage devices.

14. The system of claim 11, wherein the storage device interface network is configured to, at least one of:
selectively provide higher bandwidth connections to a subset of the one or more storage devices; and
provide a bandwidth to the host interface network that is related to an aggregate deliverable bandwidth of the one or more storage devices.

15. The system of claim 11, wherein:
the host interface network comprises a Peripheral Component Interconnect Express (PCI-E) Gen4 network;
the storage device interconnect network comprises one or more of: a PCI-E Gen3 network, an Ethernet network, a Serial Attached Small Computer System Interface (SAS) network, and a Serial Advanced Technology Attachment (SATA) network; and
the one or more storage devices comprise at least one of: a Solid State Disk (SSD), a Hard Disk Drive (HDD), a Magnetoresistive Random Access Memory (MRAM), a tape library, a hybrid magnetic and solid state storage system; and a Redundant Array of Independent Disks (RAID).
